Europäisches Patentamt

European Patent Office

Office européen des brevets

(19)

(11) Veröffentlichungsnummer: **0 348 702**
**A1**

(12) **EUROPÄISCHE PATENTANMELDUNG**

(21) Anmeldenummer: **89110259.2**

(22) Anmeldetag: **07.06.89**

(51) Int. Cl.⁴: **H01M 4/68 , C23C 2/10 ,**
**C23C 2/32 , H01M 4/74 ,**
**H01M 4/82**

(30) Priorität: **01.07.88 DE 3822393**

(43) Veröffentlichungstag der Anmeldung:
**03.01.90 Patentblatt 90/01**

(84) Benannte Vertragsstaaten:
**AT BE DE ES FR GB IT SE**

(71) Anmelder: **ACCUMULATORENFABRIK**
**SONNENSCHEIN GMBH**
**Thiergarten Postfach 1180**
**D-6470 Büdingen 1 Oberhessen(DE)**

(72) Erfinder: **Abdel-Reihim, Magdy, Dr. Ing.**
**Seemenbachstrasse 51**
**D-6473 Gedern(DE)**
Erfinder: **Tuphorn, Hans**
**Grünwaldweg 8a**
**D-6470 Büdingen(DE)**

(74) Vertreter: **Baumann, Eduard, Dipl.-Phys.**
**Postfach 1201 Sattlerstrasse 1**
**D-8011 Höhenkirchen/München(DE)**

(54) **Verfahren und Vorrichtung zum Beschichten von Elektrodengittern.**

(57) Die Erfindung bezieht sich auf ein Verfahren und eine Vorrichtung zum Beschichten von, vorzugsweise negativen, Elektrodengittern aus elektrisch gut leitendem Material mit Blei oder Blei-Legierungen. Zu diesem Zweck werden die Elektrodengitter kurzzeitig in eine Schmelze des Beschichtungsmaterials eingetaucht, wobei auf die Schmelze Ultraschall-Energie einwirkt. Dies führt zu einer Beschleunigung, Verbilligung und Verbesserung der Beschichtung.

EP 0 348 702 A1

## VERFAHREN UND VORRICHTUNG ZUM BESCHICHTEN VON ELEKTRODENGITTERN

Die Erfindung bezieht sich auf ein Verfahren gemäß dem Oberbegriff des Anspruches 1 sowie auf eine Vorrichtung gemäß dem Oberbegriff des Anspruches 4.

Die Masseträger für die negativen und positiven Elektrodenplatten von Blei- Akkumulatoren mit Schwefelsäure- Elektrolyt bestehen normalerweise aus gegossenen oder gestreckten Gittern verschiedener Blei- Legierungen. Nachteile derartiger Masseträger sind das hohe Gewicht und die schlechte elektrische Leitfähigkeit bei verhältnismäßig geringer mechanischer Festigkeit. Dies führt dazu, daß man Elektrodenplatten nicht beliebig groß herstellen kann, weil dann das eigene Gewicht und das Gewicht der in diese Gitter eingebrachten aktiven Massen nicht mehr getragen werden kann, und weil die elektrischen Spannungsverluste innerhalb der Elektrodenplatten zu groß werden. Andere Materialien mit guter elektrischer Leitfähigkeit und hoher mechanischer Festigkeit weisen demgegenüber nicht die Korrosionsbeständigkeit gegen Schwefelsäure, insbesondere bei dem stark oxidierenden Potential auf der positiven Seite, nicht die gute Haftung der aktiven Massen innerhalb der Elektrodengitter, und auch nicht die Überspannung beim Abscheiden von Wasserstoff- Gas auf, was bei dem gegen Wasserstoff negativen Potential der Bleielektrode zur Erhaltung der Ladung unerläßlich ist. Wenn man daher eines der gut leitenden Metalle für diesen Zweck verwenden will, muß es mit einer festhaftenden, porenfreien Schicht aus Blei oder einer Blei- Legierung überzogen werden.

Bisherige Verfahren des Überziehens bzw. Beschichtens mit Blei oder einer Blei-Legierung bestehen im wesentlichen aus einer galvanischen Verbleiung, siehe hierzu die DE-OS 2404650 sowie die DE-PS 2241368. Dieses Verfahren ist nicht nur relativ aufwendig, kostspielig und auch zeitaufwendig, eine derartigen Verbleiung ist auch nicht ausreichend fest. Aus diesem Grunde hat man häufig als weiteres Vorverfahren eine Verzinnung eingeführt, wobei prinzipiell das Gitter aus elektrisch gut leitendem Material von Oberflächen-Oxidationen befreit werden mußte, etwa durch vorheriges Eintauchen in ein Flußmittel, durch Ätzen oder durch mechanisches Abschleifen.

Der Erfindung liegt das technische Problem zugrunde, ein Verfahren bzw. eine Vorrichtung gemäß den Ansprüchen 1 bzw. 4 so auszugestalten, daß es rascher, billiger, reproduzierbarer und somit zuverlässiger wird, und daß bei unterschiedlichen Materialien des Elektrodengitters eine bessere Haftung erzielt wird. Hierbei soll auch die Vermeidung einer Zwischenschicht, insbesondere aus Zinn, oder irgendeine Vorbehandlung, vermieden werden.

Das technische Problem wird durch die Merkmale des Kennzeichens des Anspruches 1 bzw. des Anspruches 4 gelöst.

Die Grundidee besteht darin, daß man die Elektrodengitter in eine Schmelze des Beschichtungsmaterials eintaucht, wobei unterhalb oder seitlich eine Ultraschallquelle angeordnet wird, die vorzugsweise auf die Flächen der Elektrodengitter ausgerichtet wird, wobei die Elektrodengitter vorzugsweise an der Sonotrode vorbeigeführt werden, oder umgekehrt. Hierdurch wird die Wirkung noch verstärkt.

Geeignete Ultraschallquellen sind beispielsweise in der DE-PS 2715048 und der DE-AS 2017862 beschrieben.

Die Frequenz der verwendeten Ultraschallquelle beträgt etwa 16-30 kHz, die Eintauchzeit etwa 0,5 bis 50 sec., die Temperatur der Schmelze liegt geringfügig, nämlich etwa 5- 30 K, über der Schmelztemperatur der Schmelze. Dadurch lassen sich Dicken von ca. 100 $\mu$m erzielen.

Dieses Verfahren erfordert keinerlei Vorbehandlung oder Nachbehandlung, auch keine Trokkungsstufe. Die Elektrodengitter ·sind sofort beim Herausnehmen aus der Schmelze trocken und für die Weiterverarbeitung, etwa für das Anbringen einer Bleileiste mit Anschlußfahne, bereit.

Besonders geeignet für eine derartige Behandlung sind Elektrodengitter aus Streckmetall. Eine Streckrichtung diagonal zu derjenigen Seite der rechteckigen Platte, an der die Anschlußfahne angeordnet ist, verbessert noch zusätzlich die Leitfähigkeit des Elektrodengitters.

## Ansprüche

1. Verfahren zum Beschichten von Elektrodengittern, vorzugsweise negativen, Elektrodengittern aus elektrisch gut leitendem Material wie Kupfer, Aluminium, Titan, oder deren Legierungen, mit Blei oder Blei-Legierungen wie Blei-Zinn,
dadurch gekennzeichnet,
daß die Elektrodengitter kurzzeitig in eine Schmelze des Beschichtungsmaterials getaucht werden, und daß hierbei Ultraschall-Energie auf die Schmelze einwirkt.

2. Verfahren nach Anspruch 1, dadurch gekennzeichnet,
daß die Ultraschallenergie durch eine Sonotrode erzeugt wird, die auf wenigstens eine Fläche der Elektrodengitter ausgerichtet wird, und die am Boden oder einer Seite des Behälters für die Schmelze angeordnet wird, wobei die Elektrodengitter an der Sonotrode vorbeigeführt werden, oder umgekehrt.

3. Verfahren nach einem der Ansprüche 1 - 2, dadurch gekennzeichnet,

daß die Elektrodengitter für 0,5 bis 50 sec, vorzugsweise 5 -10 sec, in die Schmelze des Beschichtungsmaterials eingetaucht werden, daß eine Ultraschallfrequenz zwischen 16 und 30 kHz, vorzugsweise zwischen 25 bis 35 kHz, angelegt wird, und daß eine Temperatur der Schmelze zwischen 5 und 30 K, vorzugsweise 15 bis 25 K über der Temperatur des Schmelzpunktes der Schmelze aufrechterhalten wird..

4. Vorrichtung zur Durchführung des Verfahrens nach einem der Ansprüche 1 bis 3 zum Beschichten von Elektrodengittern aus elektrisch gut leitendem Material mit Blei oder Blei- Legierungen, dadurch gekennzeichnet,

daß als Elektrodengitter Streckmetall eingesetzt wird, wobei vorzugsweise die Streckrichtung des Streckmetalls diagonal zu derjenigen Seite der rechteckigen Platte, an der die Anschlußfahne angeordnet ist, verläuft.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN, Band 6, Nr. 264 (E-150)[1142], 23. Dezember 1982; JP-A-57 162 256 (HITACHI KASEI KOGYO K.K.) 06-10-1982 --- | 1-3 | H 01 M 4/68 C 23 C 2/10 C 23 C 2/32 H 01 M 4/74 H 01 M 4/82 |
| Y | FR-A-2 182 706 (S.A. DES USINES CHAUSSON) * Seite 1, Zeilen 6,29-32; Seite 2, Zeilen 15-17 * --- | 1-3 | |
| A | PATENT ABSTRACTS OF JAPAN, Band 12, Nr. 130 (E-603)[2977], 21. April 1987; & JP-A-62 256 374 (JAPAN STORAGE BATTERY CO. LTD) 09-11-1987 --- | 4 | |
| A | GB-A- 356 780 (SALMON) * Seite 5, Zeilen 88-90; Figur 8 * --- | 1 | |
| A | DE-A-3 247 201 (RHEINISCH-WESTFÄLISCHES ELEKTRIZITÄTSWERK AG) * Zusammenfassung * --- | 1 | **RECHERCHIERTE SACHGEBIETE (Int. Cl.4)** |
| A | PATENT ABSTRACTS OF JAPAN, Band 11, Nr. 384 (E-565)[2831], 15. Dezember 1987; & JP-A-62 150 659 (JAPAN STORAGE BATTERY CO., LTD) 04-07-1987 --- | 1 | C 23 C H 01 M |
| A | US-A-2 895 845 (JONES et al.) * Ansprüche 1,6 * ----- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 14-07-1989 | CZECH B.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes Dokument